(19) Europäisches Patentamt
European Patent Office
Office européen des brevets

(11) EP 2 757 126 A1

(12) DEMANDE DE BREVET EUROPEEN

(43) Date de publication:
**23.07.2014 Bulletin 2014/30**

(21) Numéro de dépôt: **13199685.2**

(22) Date de dépôt: **27.12.2013**

(51) Int Cl.:
***C08J 9/12*** *(2006.01)* ***C08G 10/02*** *(2006.01)*
***C08G 14/04*** *(2006.01)* ***C08G 101/00*** *(2006.01)*

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **16.01.2013 FR 1350358**

(27) Demande déposée antérieurement:
**16.01.2013 FR 1350358**

(71) Demandeurs:
- **Université de Lorraine**
  **54052 Nancy Cedex (FR)**
- **Centre National de la Recherche Scientifique**
  **75016 Paris (FR)**

(72) Inventeurs:
- **Li, Xinjun**
  **201203 SHANGHAI (CN)**
- **Pizzi, Antonio**
  **88000 CHANTRAINE (FR)**
- **Celzard, Alain**
  **88000 EPINAL (FR)**
- **Fierro, Vanessa**
  **EPINAL 88000 (FR)**

(74) Mandataire: **Pontet Allano & Associes**
**Parc Les Algorithmes, Bâtiment Platon**
**CS 70003 Saint Aubin**
**91192 Gif sur Yvette Cedex (FR)**

# (54) Mouses rigides à bases de tannins de type prorobinetidine/profisetinidine et exemptes de formaldéhyde

(57) Mousse rigide à base de tannins comprenant de 10 à 100% de cellules ouvertes et totalement exempte de formaldéhyde, ladite mousse comprenant au moins un tannin de type prorobinetidine ou profisetinidine, de l'alcool furfurylique comme agent copolymérisant, du glutaraldéhyde comme monomère, au moins un agent gonflant et au moins un catalyseur acide, son procédé de préparation et son utilisation.

EP 2 757 126 A1

## Description

La présente invention a pour objet des mousses rigides à base de tannins de type prorobinetidine/profisetinidine, leur procédé de préparation et leur utilisation.

Les mousses biosourcées, en particulier des mousses tannin/furaniques à base de tannins condensés tels que les tannins de mimosa et de quebracho contenant du formaldéhyde ont été décrites en 1994 (Meikleham, N.E., et al., Journal ofc Applied Polymer Science, (1994), 53(11), 1547-1556). Du fait de leur faible coût, de leur bonne résistance à la compression, de leur fort pouvoir isolant et de leur résistance au feu, ces mousses constituent une alternative très intéressante aux mousses phénoliques et aux polyuréthanes dans diverses applications (Celzard, A., et al. Polymer Degradation and Stability, (2011), 96(4), 477-482 ; Celzard, A., et al. Materials Science and Engineering a-Structural Materials Properties Microstructure and Processing, (2010), 527(16-17), 4438-4446). Par ailleurs elles sont constituées à 95 % de matériaux naturels et sont composées de deux matériaux bruts principaux :a) des tannins flavonoïdes de type prorobinetidine ou profisetinidine notamment issus d'écorce ou de bois d'arbres et b) de l'alcool furfurylique obtenu par réduction catalytique du furfural, dérivé naturel obtenu par l'hydrolyse de sucres issus des déchets agricoles. Cependant le formaldéhyde libère dans l'atmosphère des substances qui causent des irritations de la peau, des yeux et du système respiratoire, provoquent des maux de tête et des vertiges et pourraient être responsables d'allergies et d'asthme chez l'enfant. En outre le formaldéhyde est classé comme potentiellement cancérogène dans l'Union Européenne et comme agent cancérogène par le Centre international de Recherche sur le cancer (CIRC). Enfin, dans le cadre du deuxième plan national santé environnement (PNSE2), il sera obligatoire d'identifier les émissions des produits contenant du formaldéhyde, en particulier dans les isolants thermiques.

Des mousses exemptes de formaldéhyde ont donc été développées pour répondre aux futures exigences environnementales. Ainsi Link M. et al. (BioResources (2011), 6(4), 4218-4228) décrivent des mousses à base de tannin de mimosa exemptes de formaldéhyde, lesdites mousses étant obtenues par la réaction de tannin avec de l'alcool furfurylique en absence de formaldéhyde à une température comprise entre 120 et 160 °C. Les mousses obtenues présentent des propriétés mécaniques inférieures à celles des mousses contenant du formaldéhyde. La demande internationale WO 2012/162684 décrit des mousses à cellules fermées à base de tannin sans formaldéhyde qui sont préparées par réaction de tannins avec des monomères comme par exemple le furfural, le glyoxal ou l'acétaldéhyde. Ces mousses présentent des conductivités thermiques comprises entre 0,025 et 0, 036 W/m.K. donc une faible résistance thermique.

Il existe donc un besoin de proposer des mousses exemptes de formaldéhyde qui pourront répondre aux futures exigences environnementales tout en gardant des propriétés intéressantes, en particulier une bonne résistance au feu.

Le but de la présente invention est donc de fournir des mousses exemptes de formaldéhyde qui répondent aux futures exigences environnementales et présentent des propriétés intéressantes.

Or les inventeurs ont trouvé de manière surprenante que le glutaraldéhyde, composé non-volatile, pouvait être utilisé en lieu et place du formaldéhyde.

Aussi la présente invention a pour objet une mousse rigide à base de tannins comprenant de 10 à 100% de cellules ouvertes et totalement exempte de formaldéhyde, ladite mousse comprenant :

a. au moins un tannin de type prorobinetidine ou profisetinidine,
b. de l'alcool furfurylique comme agent copolymérisant,
c. du glutaraldéhyde comme monomère,
d. au moins un agent gonflant et
e. au moins un catalyseur acide.

Au sens de la présente invention, l'expression « au moins un tannin de type prorobinetidine ou profisetinidine » signifie que la mousse est composée majoritairement de l'un au moins de ces deux types de tannins, c'est-à-dire qu'elle comprend entre 30 et 100 % de l'un au moins de ces deux types de tannins ou de leurs mélanges.

Au sens de la présente invention on entend par « cellules ouvertes » le fait que les mousses contiennent des pores qui sont connectés les uns aux autres et forment un réseau interconnecté qui est relativement souple. Conformément à l'invention, 10 à 100 % des cellules peuvent être des cellules ouvertes, donc 0 à 90 % des cellules peuvent être des cellules fermées. Avantageusement, les mousses peuvent contenir de 20 à 100 % de cellules ouvertes, ou de 50 à 100 % de cellules ouvertes.

Au sens de la présente invention le terme « exempte de formaldéhyde » signifie que la mousse est préparée par une nouvelle approche utilisant un aldéhyde alternatif au formaldéhyde, à savoir le glutaraldéhyde, qui n'a jamais été utilisé dans cette application ; la mousse est donc réalisée sans utiliser de formaldéhyde comme monomère.

Conformément à l'invention, tout type de tannin de type prorobinetidine ou profisetinidine ainsi que leurs mélanges peuvent être utilisés. Ils peuvent être d'origine naturelle ou d'origine synthétique, ou peuvent être modifiés par des procédés chimiques ou physiques. Les tannins de type prorobinetinidine possèdent un anneau A de type résorcinol

et un anneau B de type pyrogallol ; l'élément de base est le robinétinidol de formule

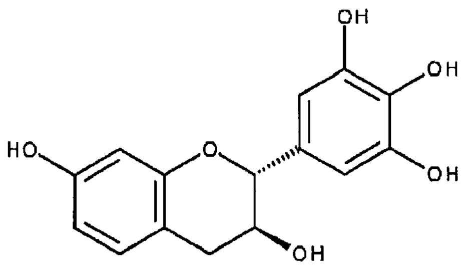

robinétidinol

Les tannins de type profisetinidine possèdent un anneau A de type résorcinol et un anneau B de type catéchol ; l'élément de base est le fisétinidol de formule

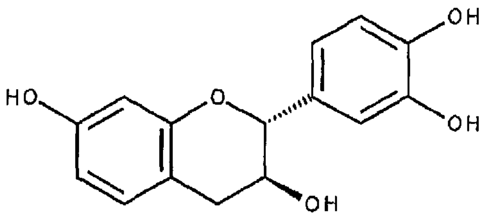

fisetinidol

Dans un mode de réalisation avantageux de l'invention, l'agent gonflant est un solvant à bas point d'ébullition ou un mélange de solvants à bas point d'ébullition, c'est-à-dire un ou plusieurs solvants dont le point d'ébullition est compris entre 30 et 60 °C, avantageusement entre 35 et 45 °C. On peut citer à titre d'exemple le pentane, l'isopentane et le diéthyléther et leurs mélanges. De manière avantageuse on utilise le diéthyléther.

Dans un mode de réalisation avantageux de l'invention le catalyseur acide qui déclenche les différentes réactions de polycondensation est choisi parmi ceux classiquement utilisés. On peut citer à titre d'exemple l'acide benzènesulfonique, l'acide *para*-toluènesuifonique, l'acide xylènesulfonique, l'acide naphtalènesulfonique, l'acide éthylbenzènesulfonique, l'acide phénolsulfonique, l'acide sulfurique, l'acide phosphorique, l'acide borique, l'acide chlorhydrique, l'acide dichloroacétique, l'acide trichloroacétique et des mélanges de ceux-ci. Avantageusement on utilisera l'acide *para*-toluènesulfonique.

Dans un autre mode de réalisation avantageux de l'invention, le rapport tannin : glutaraldéhyde exprimé en poids est compris entre 10 : 1 et 10 : 2,3, avantageusement compris entre 10 : 1 et 10 : 1,7, encore plus avantageusement égal à 10 : 1,3. Ainsi pour 30 g de tannin, on utilise 3, 5 ou 7 g de glutaraldéhyde, avantageusement 4 g de glutaraldéhyde.

Dans un mode de réalisation avantageux de l'invention, le tannin est choisi dans le groupe comprenant les tannins formés en majorité de tannins de type prorobinétinidine et/ou profisétinidine, en particulier le tannin de mimosa, le tannin de quebracho et le tannin d'acacia mangium.

Conformément à l'invention les tannins sont extraits soit des feuilles, soit des bourgeons, soit des racines, soit des graines, soit des pépins, soit de l'écorce, soit du tronc des végétaux. Ils peuvent également être extraits des résidus solides obtenus après pressage de raisins.

Dans un autre mode de réalisation avantageux de l'invention, la mousse contient en outre des additifs classiquement utilisés et notamment choisis parmi le noir de carbone, les nanotubes de carbone, la nanoargile, les polymères hyper-ramifiés, les isocyanates, les polyuréthanes, le glycérol et les tensio-actifs. Ces additifs agissent sur les propriétés structurales (densité et texture poreuse) et/ou sur les propriétés physiques (absorption d'eau, résistance à la compression de la mousse, etc.) ou sur la résistance au feu.

L'invention a également pour objet un article comprenant une mousse telle que définie précédemment. On peut citer à titre d'exemple d'article, des panneaux sandwich dans lesquels la mousse est la partie interne de l'assemblage, des pare-chocs de véhicules, des sièges, des cloisons. Les mousses selon l'invention peuvent être utilisées comme

ignifuge ou pour l'isolation thermique ou acoustique.

Conformément à l'invention, les mousses peuvent être préparées par mélange du tannin, de l'alcool furfurylique et du glutaraldéhyde éventuellement en présence d'eau, pendant un temps suffisant pour permettre la dissolution du tannin. Le mélange peut être réalisé par toute technique connue de l'homme du métier, notamment par mélange manuel ou par mélange mécanique avec soit un mixer, soit une extrudeuse à double vis, soit un broyeur à boulets, ou à attrition. Ensuite on ajoute le catalyseur et éventuellement les additifs.

Un autre objet de l'invention est une méthode de préparation d'une mousse comprenant de 10 à 100% de cellules ouvertes à base de tannin comprenant une étape de polymérisation d'au moins un tannin de type prorobinetidine ou profisetinidine avec du glutaraldéhyde.

Dans un mode de réalisation avantageux de l'invention la méthode comprend en outre une étape d'addition d'eau.

Un autre objet de l'invention est une composition pour la préparation de mousses rigides à base de tannins comprenant de 10 à 100% de cellules ouvertes et totalement exempte de formaldéhyde, ladite composition comprenant :

a. au moins un tannin de type prorobinetidine ou profisetinidine,
b. de l'alcool furfurylique comme agent copolymérisant,
c. du glutaraldéhyde comme monomère,
d. au moins un agent gonflant,
e. au moins un catalyseur acide et
f. optionnellement 5 à 30 % en poids d'eau.

Les mousses selon l'invention présentent une très faible conductivité thermique donc de très bonnes propriétés de résistance au feu et peuvent être utilisées notamment pour l'isolation thermique de bâtiment, et la protection des appareils ménagers et industriels. Elles présentent par ailleurs l'avantage de ne pas émettre de formaldéhyde.

L'invention est illustrée dans les exemples 1 et 2 et les figures 1 à 4.

La figure 1 représente les mousses selon l'invention et des mousses de référence. 1a) illustration du rétrécissement des mousses de référence par rapport aux mousses de l'invention. GLU-16 mousse à base de glutaraldéhyde préparée selon l'exemple 1 ; GLY-7,4 mousse à base de glyoxal ; F-GLY mousse à base de glyoxal et de formaldéhyde préparée selon l'exemple 1 ; 1b) photo de microscopie électronique à balayage illustrant la microstructure spécifique des mousses à base de glutaraldéhyde préparées selon l'exemple 1.

La figure 2 illustre la relation contrainte-déformation de mousses à base de tannin de mimosa / alcool furfurylique / glutaraldéhyde contenant 4 g de glutaraldéhyde (GLU-16) mais de densités différentes exprimées en kg/m$^3$ (89, 74, 72 ou 69 kg/m$^3$) et préparées selon l'exemple 1. La mesure est réalisée selon l'exemple 2.

La figure 3 illustre la résistance à la compression de mousses à base de tannin de mimosa / alcool furfurylique / glutaraldéhyde ayant des concentrations différentes en glutaraldéhyde préparées selon l'exemple 1, comparativement à une mousse au formaldéhyde (Std).

La figure 4 représente la conductivité thermique d'une mousse à base de tannin exempte de formaldéhyde (GLU-16 tannin de mimosa/ alcool furfurylique / glutaraldéhyde) et la comparaison avec une mousse à base de tannin avec du formaldéhyde (Std).

**Exemple 1 : Préparation de mousses selon l'invention**

1.1 Matériaux

Le tannin utilisé est du tannin de mimosa *(Acacia mearnsii,* anciennement *mollissima,* de Wildt) fourni par SilvaChimica (S.Michele Mondovi, Italie). Il est composé essentiellement de prorobinetinidines et contient plus de 80 % d'unités oligomériques de A, B et C,

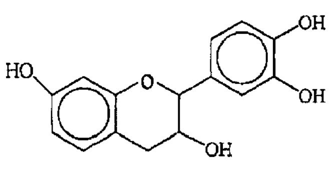
A

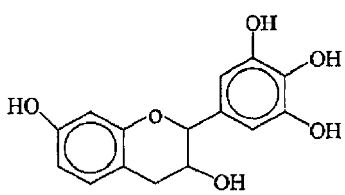
B

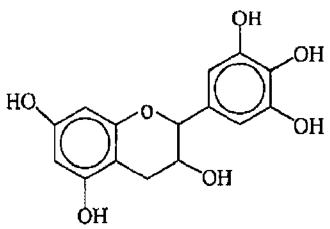
C

B étant l'unité majoritaire. L'alcool furfurylique (FA), le glyoxal en solution à 40 % en poids dans l'eau (Gly) et le glutaraldéhyde en solution à 25 % en poids dans l'eau (Glu) proviennent d'Acros Organics, Geel-Belgique. Le diéthyléther (DE) est fourni par Sigma-Aldrich et le formaldéhyde en solution à 37 % en poids dans l'eau (Form) est fourni par Merck-Stuttgart OHG, Allemagne.

1.2. Préparation des mousses

Différentes mousses sont préparées selon le tableau 1 suivant :

Tableau 1

| Code | Eau (g) | FA (g) | Form (g) | Glu (g) | Gly (g) | DE (g) | Tannin (g) | pTSA (g) |
|---|---|---|---|---|---|---|---|---|
| Std | 6 | 10,5 | 7,4 | 0 | 0 | 1~5 | 30 | 11 |
| GLY-7,4 | 6 | 10,5 | 0 | 0 | 7,4 | 1~5 | 30 | 11 |
| GLY-16 | 6 | 10,5 | 0 | 0 | 16 | 1~5 | 30 | 11 |
| F-GLY | 6 | 10,5 | 4 | 0 | 4 | 1~5 | 30 | 11 |
| GLU-12 | 0 | 10,5 | 0 | 12 | 0 | 1~5 | 30 | 11 |
| GLU-16 | 0 | 10,5 | 0 | 16 | 0 | 1~5 | 30 | 11 |
| GLU-20 | 0 | 10,5 | 0 | 20 | 0 | 1~5 | 30 | 11 |

Std : formulation de l'art antérieur comprenant du formaldéhyde (7,4 g d'une solution dans l'eau à 37 %, soit 2,73 g de formaldéhyde).
GLY-7,4 : formulation contenant du glyoxal (7,4 g d'une solution dans l'eau à 40 %, soit 2,96 g de glyoxal) à la place du formaldéhyde.
GLY-16 : formulation contenant du glyoxal (16 g d'une solution dans l'eau à 40 %, soit 6,4 g de glyoxal) à la place du formaldéhyde.
F-GLY : formulation contenant du glyoxal (4 g d'une solution dans l'eau à 40 %, soit 1,6 g de glyoxal) et du formaldéhyde (4 g d'une solution dans l'eau à 37 %, soit 1,48 g de formaldéhyde).
GLU-12 : formulation contenant du glutaraldéhyde (12 g d'une solution dans l'eau à 25 % dans l'eau, soit 3 g de glutaraldéhyde) à la place du formaldéhyde.
GLU-16 : formulation contenant du glutaraldéhyde (16 g d'une solution dans l'eau à 25 % dans l'eau, soit 4 g de glutaraldéhyde) à la place du formaldéhyde.
GLU-20 : formulation contenant du glutaraldéhyde (12 g d'une solution dans l'eau à 25 % dans l'eau soit 5 g de glutaraldéhyde) à la place du formaldéhyde.
Pour chaque type de mousse, il est possible d'obtenir des densités différentes. Ainsi pour la mousse GLU-16, ont été réalisées une mousse de densité 89 kg/$m^3$ (4 g de DE), une mousse de densité 74 kg/$m^3$ (3,5 g de DE), une mousse de densité 72 kg/$m^3$ (3,5 g de DE) et une mousse de densité 69 kg/$m^3$ (3 g de DE).
FA : alcool furfurylique Form : formaldéhyde ; Glu : glutaraldéhyde ; Gly : Glyoxal ; DE : diéthyléther ; pTSA : acide *para*-toluènesulfonique

L'eau, l'alcool furfurylique, le formaldéhyde (ou le glutaraldéhyde ou le glyoxal), le diéthyléther et le tannin sont mélangés sous forte agitation mécanique. Après 60 secondes on ajoute l'acide *para*-toluènesulfonique sous forme de solution aqueuse et on agite pendant 20 secondes jusqu'à formation d'une mousse. La mousse est laissée au repos pendant 5 jours soit à la température ambiante, soit à une température comprise entre l'ambiante et 60 °C, avant de faire les tests.

1.3. Morphologie des mousses

Des échantillons de mousses sont placés à -40 °C puis découpés en morceaux de 5x5x4 $mm^3$ qui sont observés avec un microscope à balayage Hitachi S 4800 avec un agrandissement x200.

1.3.2. Résultats

Ils sont illustrés dans les figures 1a et 1b.

La formulation Std et les formulations GLU donnent une mousse 20 secondes après l'addition de l'acide *para*-toluènesulfonique et durcissent au bout de 3 minutes.

La formulation GLU-12 rétrécit légèrement à la fin du moussage. Les formulations GLY-7,4 et GLY-16 donnent également une mousse dans les 20 secondes après l'addition de l'acide *para*-toluènesulfonique mais rétrécissent de manière importante à la fin du moussage. Les formulations GLU-16 et GLU-20 ne présentent aucun rétrécissement.

Les mousses à base de glutaraldéhyde présentent une morphologie particulière illustrée dans la figure 1b pour une mousse GLU-16 ayant une densité de 72 kg/m. Plus de 90 % des cellules sont des cellules ouvertes.

**Exemple 2 : Propriétés des mousses selon l'invention**

Les tests sont réalisés sur des échantillons de mousse de 30x30x15 $mm^3$.

1.1 Mesure de la densité

Elle est définie comme le poids de l'échantillon divisé par son volume.

1.2 Résistance à la compression

1.2.1 Mode opératoire

Les tests de compression sont réalisés à 25 °C avec un appareil Instron 4467 équipé d'une tête de 30 kN à une vitesse de charge constante égale à 2mm/min.

1.2.2 Résultats

Ils sont donnés dans les figures 2 et 3.

Pour chaque échantillon, on peut distinguer trois domaines : un domaine linéaire élastique (jusqu'à 10 % de tension en moyenne), un long plateau crénelé pour des tensions comprises entre 10 et 60 % puis une zone de densification pour des tensions supérieures à 60 % (figure 2). Le plateau crénelé est dû à la coexistence de zones effondrées et de zones non effondrées, typique d'une mousse friable subissant des fractures successives des parois cellulaires. Au-delà du plateau, on observe un début de densification et le stress augmente fortement quand la densification complète commence. Ces caractéristiques sont typiques des mousses à base de phénol et de formaldéhydes. La résistance à la compression augmente avec la densité (figure 3). La mousse GLU-16 est aussi résistante que la mousse standard à base de formaldéhyde (Std). La mousse GLU-12 est moins résistante du fait d'une réticulation plus faible. Pour la mousse GLU-20, la quantité d'eau ajoutée étant plus importante, la quantité de solide est plus faible et se traduit lors de l'évaporation par des défauts dans la mousse finale (figure 3).

1.3 Conductivité thermique

1.3.1 Mode opératoire

Des échantillons de mousse sont découpés en morceaux de 100x50x30 $mm^3$ et placés sous vide pendant 1 jour pour éliminer l'agent gonflant résiduel. La mesure de la conductivité thermique est réalisée avec un conductimètre thermique FP2C Neotim à la température ambiante avec une sonde de 13,6 Ω, une puissance de 0,04 W pendant 180 secondes.

1.3.2 Résultats

La conductivité thermique des mousses comprend quatre volets : la conduction à travers le solide $\lambda_s$, la conduction à travers le gaz à l'intérieur des cellules $X_g$, la convection dans les cellules $k_c$ et la radiation à travers les parois cellulaires par les pores $X_r$, (Schuetz, M.A., Glicksman, L.R., 1984, 20(2), 114-121 ; Venkatesan, C., Jin, G.P., Chyu, M.C., Zheng, J.X., Chu, T.Y. International Journal of Thermal Sciences, 2001, 40(2), 133-144). La convection des cellules peut être ignorée lorsque le diamètre des cellules est inférieur à 10 mm, ce qui est le cas des mousses de la présente invention et des mousses de référence.

Les résultats sont donnés dans la figure 4 pour la mousse GLU-16 comparativement à une mousse standard. La conductivité de mousses présentant respectivement une densité de 50 ou de 200 $kg/m^3$ a été mesurée. Elle est linéaire en fonction de la densité et répond à l'équation :

$$\lambda^* = 0{,}0292 + 1{,}96\times10^{-4}\rho^* \quad (R^2=0{,}984)$$

Lorsque la densité augmente, la porosité de la mousse diminue ; la mousse contient en effet plus de solide et moins d'air ce qui conduit à une augmentation graduelle de la conductivité thermique. Non seulement le remplacement du formaldéhyde par du glutaraldéhyde n'augmente pas la conductivité thermique mais celle-ci est très inférieure à la valeur de 0,25 $W.m^{-1}.K^{-1}$ considérée en général comme une limite pour les matériaux résistant au feu (figure 4).

Ces résultats suggèrent que les mousses selon l'invention exemptes de formaldéhyde, ce dernier étant totalement remplacé par du glutaraldéhyde, présentent d'excellentes propriétés de résistance thermique. En revanche les mousses dans lequel le formaldéhyde est partiellement remplacé par du glyoxal ou totalement remplacé par du glyoxal présentent une moindre résistance au feu.

**Revendications**

**1.** Mousse rigide à base de tannins comprenant de 10 à 100% de cellules ouvertes et totalement exempte de formaldéhyde, ladite mousse comprenant :

a. au moins un tannin de type prorobinetidine ou profisetinidine,
b. de l'alcool furfurylique comme agent copolymérisant,
c. du glutaraldéhyde comme monomère,
d. au moins un agent gonflant et
e. au moins un catalyseur acide.

**2.** Mousse selon la revendication 1 **caractérisée en ce que** l'agent gonflant est un solvant à bas point d'ébullition, notamment du diéthyléther ou un mélange de solvants à bas point d'ébullition.

**3.** Mousse selon l'une quelconque des revendications précédentes **caractérisée en ce que** le rapport tannin : glutaraldéhyde exprimé en poids est compris entre 10 : 1 et 10 : 2,3, avantageusement compris entre 10 : 1 et 10 : 1,7, encore plus avantageusement égal à 30 : 1,3.

**4.** Mousse selon l'une quelconque des revendications précédentes **caractérisée en ce que** le tannin est choisi dans le groupe comprenant le tannin de mimosa, le tannin de quebracho et le tannin d'acacia mangium.

**5.** Mousse selon l'une quelconque des revendications précédentes **caractérisée en ce qu'**elle contient en outre des additifs choisis parmi le noir de carbone, les nanotubes de carbone, la nanoargile, les polymères hyper-ramifiés, les isocyanates, les polyuréthanes, le glycérol et les tensio-actifs.

**6.** Article comprenant une mousse selon l'une quelconque des revendications précédentes.

**7.** Méthode de préparation d'une mousse selon l'une quelconque des revendications précédentes caractérisée en qu'elle comprend une étape de polymérisation d'au moins un tannin avec du glutaraldéhyde.

**8.** Méthode selon la revendication 7, **caractérisée en ce qu'**elle comprend en outre une étape d'addition d'eau.

**9.** Composition pour la préparation de mousses rigides à base de tannins comprenant de 10 à 100% de cellules ouvertes et totalement exempte de formaldéhyde, ladite composition comprenant :

a. au moins un tannin de type prorobinetidine ou profisetinidine,
b. de l'alcool furfurylique comme agent copolymérisant,
c. du glutaraldéhyde comme monomère,
d. au moins un agent gonflant,
e. au moins un catalyseur acide et
f. optionnellement 5 à 30 % en poids d'eau.

FIGURE 1

**a)**

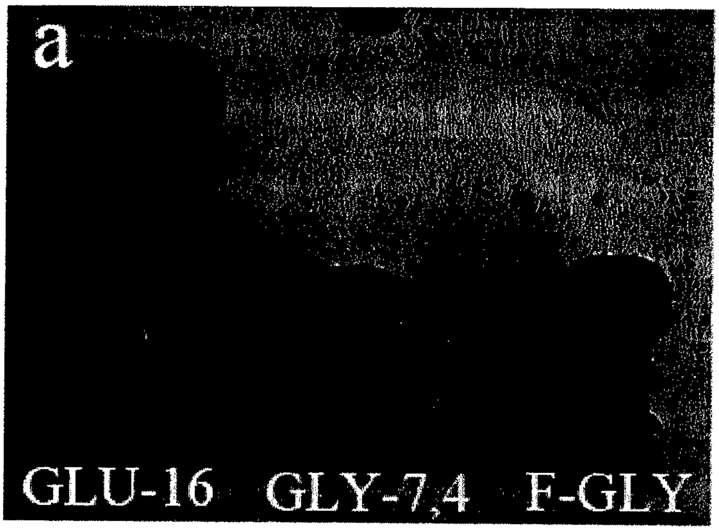


**b)**

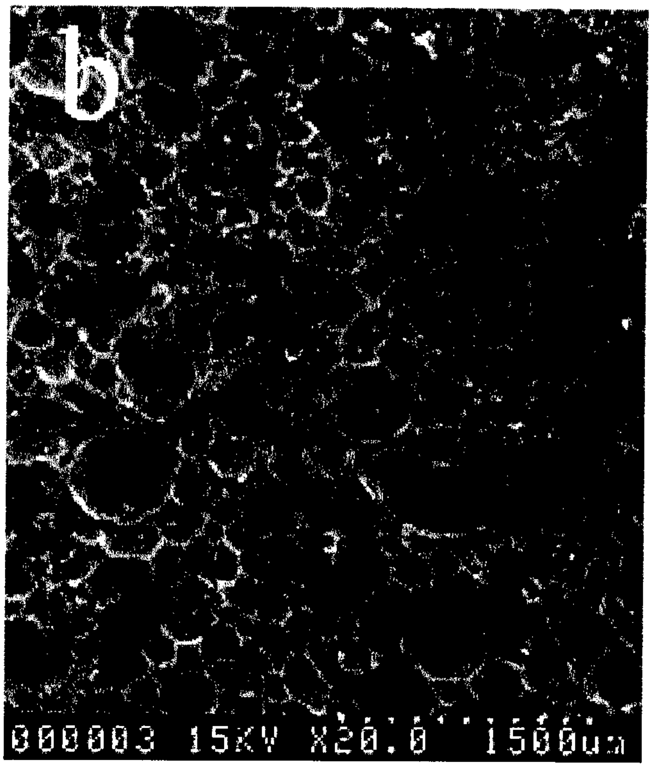

FIGURE 2

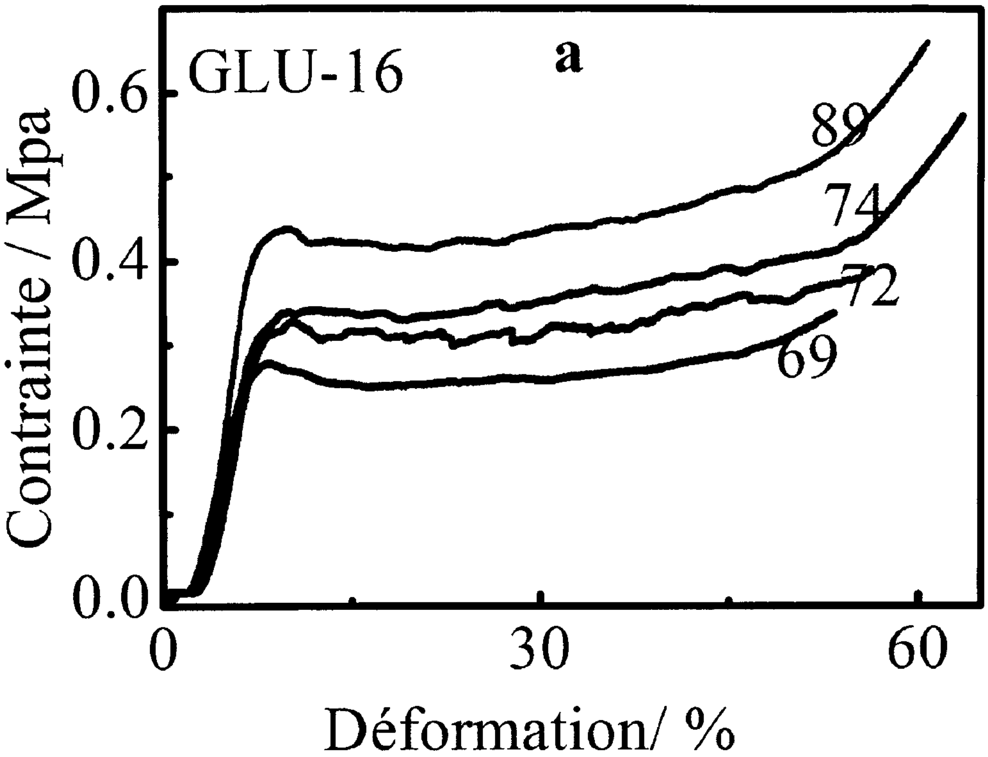
GLU-16
a
89
74
72
69
Contrainte / Mpa
0.0
0.2
0.4
0.6
0
30
60
Déformation/ %

FIGURE 3

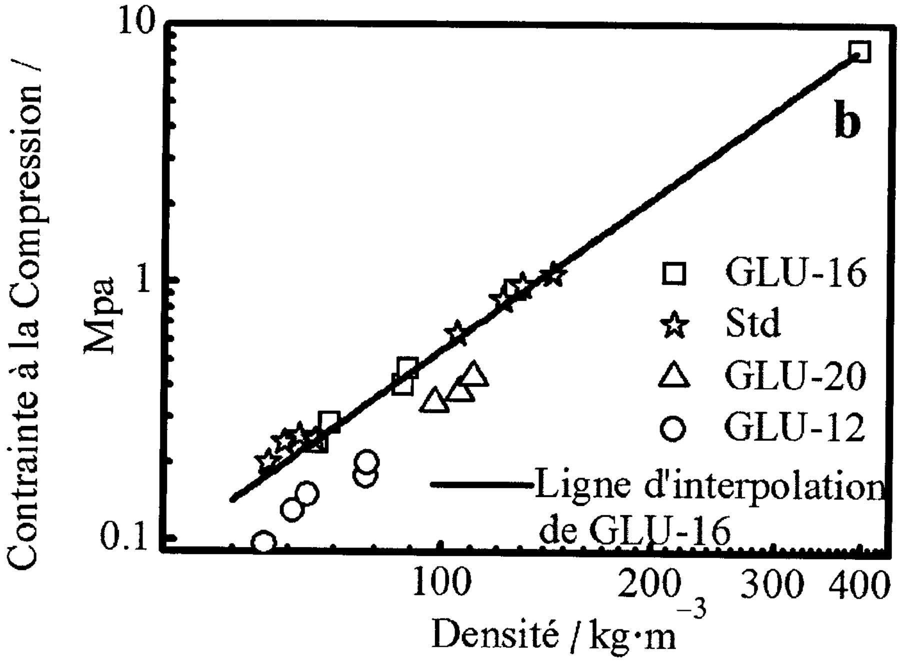
10
1
0.1
Contrainte à la Compression / Mpa
b
GLU-16
Std
GLU-20
GLU-12
Ligne d'interpolation de GLU-16
100
200
300
400
Densité / kg·m−3

FIGURE 4

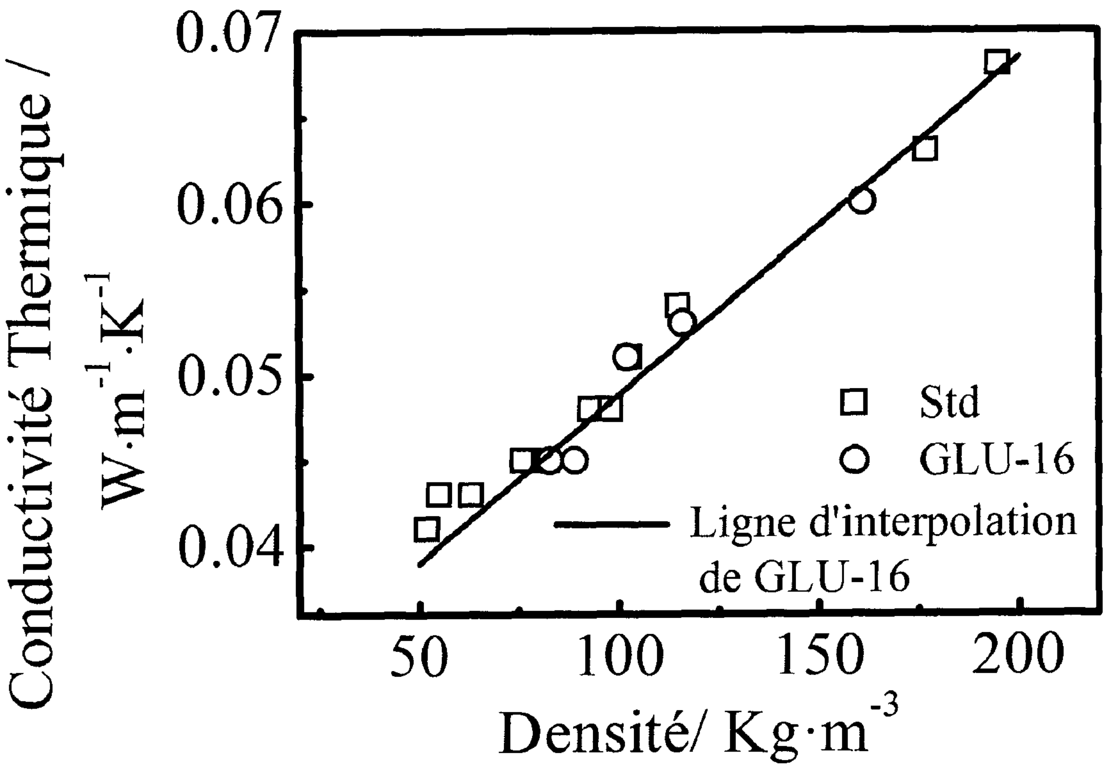
Conductivité Thermique /
W·m-1·K-1
0.07
0.06
0.05
0.04
50
100
150
200
Densité/ Kg·m-3
Std
GLU-16
Ligne d'interpolation de GLU-16

Europäisches Patentamt
European Patent Office
Office européen des brevets

# RAPPORT DE RECHERCHE EUROPEENNE

Numéro de la demande
EP 13 19 9685

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | LI X ET AL: "Modification of tannin based rigid foams using oligomers of a hyperbranched poly(amine-ester)", JOURNAL OF POLYMER RESEARCH, KLUWER ACADEMIC PUBLISHERS-CONSULTANTS BUREAU, NL, vol. 19, no. 12, 16 novembre 2012 (2012-11-16), pages 1-9, XP035155859, ISSN: 1572-8935, DOI: 10.1007/S10965-012-0021-4 * le document en entier * ----- | 1-9 | INV. C08J9/12 C08G10/02 C08G14/04 C08G101/00 |
| A | WO 2012/162645 A2 (DU PONT [US]; HARMER MARK ANDREW [US]; KAPUR VIVEK [US]; WILLIAMS SHAR) 29 novembre 2012 (2012-11-29) * le document en entier * ----- | 1-9 | |
| | | | DOMAINES TECHNIQUES RECHERCHES (IPC) |
| | | | C08J C08G |

Le présent rapport a été établi pour toutes les revendications

| Lieu de la recherche | Date d'achèvement de la recherche | Examinateur |
|---|---|---|
| Munich | 26 mars 2014 | Iraegui Retolaza, E |

3

EPO FORM 1503 03.82 (P04C02)

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

**ANNEXE AU RAPPORT DE RECHERCHE EUROPEENNE RELATIF A LA DEMANDE DE BREVET EUROPEEN NO.** EP 13 19 9685

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-03-2014

| Document brevet cité au rapport de recherche | Date de publication | Membre(s) de la famille de brevet(s) | Date de publication |
|---|---|---|---|
| WO 2012162645 A2 | 29-11-2012 | CA 2834598 A1 | 29-11-2012 |
| | | CA 2834603 A1 | 29-11-2012 |
| | | EP 2714783 A2 | 09-04-2014 |
| | | EP 2714784 A2 | 09-04-2014 |
| | | WO 2012162645 A2 | 29-11-2012 |
| | | WO 2012162653 A2 | 29-11-2012 |
| | | WO 2012162656 A2 | 29-11-2012 |
| | | WO 2012162684 A2 | 29-11-2012 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2012162684 A


### Littérature non-brevet citée dans la description


- **MEIKLEHAM, N.E. et al.** *Journal ofc Applied Polymer Science,* 1994, vol. 53 (11), 1547-1556
- **CELZARD, A. et al.** *Polymer Degradation and Stability,* 2011, vol. 96 (4), 477-482
- **CELZARD, A. et al.** *Materials Science and Engineering a-Structural Materials Properties Microstructure and Processing,* 2010, vol. 527 (16-17), 4438-4446
- **LINK M. et al.** *BioResources,* 2011, vol. 6 (4), 4218-4228
- **VENKATESAN, C. ; JIN, G.P. ; CHYU, M.C. ; ZHENG, J.X. ; CHU, T.Y.** *International Journal of Thermal Sciences,* 2001, vol. 40 (2), 133-144